# EUROPÄISCHE PATENTANMELDUNG

(11) **EP 1 405 834 A2**
(43) Veröffentlichungstag der Anmeldung: **07.04.2004**
(21) Anmeldenummer: 03019676.0
(22) Anmeldetag: 09.09.2003
(51) Int. Cl.: C03C 13/04

(54) **Optische Fasern aus Mehrkomponentengläsern**

(30) Priorität: 02.10.2002 DE 10245987
(71) Anmelder: Schott Glas, 55122 Mainz (DE)
(72) Erfinder: Domres, Ralf, 55452 Rümmelsheim (DE); Gehenn, Norbert Wolfram, Dr., 55126 Mainz (DE); Kolberg, Uwe, Dr., 55124 Mainz (DE); Krolla, Georg, 55122 Mainz (DE); Lentes, Frank Thomas, Dr., 55411 Bingen (DE)
(74) Vertreter: Fuchs Mehler Weiss & Fritzsche

(57) **Zusammenfassung**

Innerhalb des Zusammmensetzungsbereichs der DE199 58 522 A1 für zinkhaltige optische Gläser wurde ein Gebiet dahingehend identifiziert, dass Kerngläser aus diesem Bereich sich sehr gut zur Faserherstellung mit speziellen, kompatiblen Mantelgläsern eignen. Diese Fasern zeichnen sich u.a. aus durch eine niedrige Dämpfung, hohe NA (≥ 0,50) und sehr neutrale Farbübertragung sowie weitgehend umweltfreundliche Rohstoffkomponenten und niedrige Herstellkosten. Letztere können durch Einsatz mehr oder weniger reiner Rohstoffe in Korrelation zur Dämpfung gezielt für die jeweilige Verwendung (Übertragungslänge, Bündelquerschnitt) beeinflusst werden.

Reduziert man die Forderung nach einer NA ≥ 0,50 auf einen leicht niedrigeren Wert von NA ≥ 0,48, so ist erfindungsgemäß sogar eine völlig bleifreie Faser realisierbar. Auch diese zeichnet sich durch eine niedrige Dämpfung und sehr neutrale Farbübertragung aus, wobei jedoch Rohstoffe zur Herstellung der Gläser Verwendung finden, die keine Umweltbelastung darstellen.

Allerdings eignet sich nicht jeder Mantelglastyp zur Herstellung brauchbarer Fasern
mit Kerngläsern aus dem bevorzugten Zusammensetzungsbereich. Nur ein Mantelglastyp gemäß Anspruch 1 mit spezieller Zusammensetzung konnte identifiziert werden, der hinsichtlich Faserdämpfung ein optimales Ergebnis liefert. Alle anderen Kandidaten lieferten deutlich schlechtere Ergebnisse bis hin zu starker Kristallisation in der Grenzfläche.

## Beschreibung

Die Erfindung betrifft optische Stufenfasern aus Mehrkomponentengläsern umfassend ein Kernglas und ein das Kernglas vollständig an seiner Umfangswand umschließendes Mantelglas sowie die Verwendung solcher optischer Stufenfasern.

Im allgemeinen ist eine Glasfaser zur Lichtübertragung aus einem hochbrechenden Kernglas und einem dieses umgebenden Mantelglas mit niedrigerer Brechzahl als der des Kernglases aufgebaut. Ein lichtübertragender Glaskörper in Faserform, bei dem über den Querschnitt des Kernglases die Brechzahl konstant ist, nennt man Stufenfaser. Glasfasern dieses Typs übertragen Licht, das in das eine Ende der Faser eingekoppelt wird an das andere Ende der Faser, wobei das Licht an der. Grenzfläche zwischen Kernglas und Mantelglas vollständig reflektiert wird (Totalreflexion).

Die Lichtmenge, die in eine solche Faser eingekoppelt und übertragen werden kann, ist proportional dem Quadrat der Numerischen Apertur (NA) der Faser und der Querschnittsfläche des Faserkerns. Um möglichst große Lichtmengen über kurze bis mittlere Entfernungen ( < 100 m) zu übertragen, werden solche Stufenfasern häufig zu dichten Faserbündeln zusammengepackt, mit einem Schutzschlauch versehen, ihre Enden in Metallhülsen eingeklebt und die Stirnseiten durch Schleifen und Polieren zu optisch planen Flächen bearbeitet. Entsprechend konfektionierte optische Faserbündel nennt man faseroptische Lichtleiter.

Faseroptische Lichtleiter finden in den unterschiedlichsten technischen und medizinischen Bereichen Anwendung (allgemeine Industrietechnik, Beleuchtungs-, Verkehrstechnik, Automobilindustrie, Architektur, Endoskopie, Dentalmedizin). Ihre wichtigste Funktion ist die Übertragung eines möglichst großen Lichtstroms von einem Ort A zu einem anderen Ort B, meist über kurze bis mittlere Entfernungen (einige wenige bis maximal 100 m). Dabei wird häufig das von einer leistungsstarken Lichtquelle ausgehende Licht z.B. das einer Halogen- oder Entladungslampe mittels optischer Hilfsmittel wie Linse /Reflektor in das Faserbündel eingekoppelt.

Je höher die NA der das Bündel enthaltenden Einzelfasern ist, desto größere Lichtmengen können diese Lichtleiter übertragen.

Die durch faseroptische Lichtleiter übertragene Lichtmenge hängt neben der NA ihrer Fasern auch ab von der Transmissionseigenschaft der sie enthaltenden Kerngläser. Nur Kerngläser ganz bestimmter spezifischer Zusammensetzung und mit sehr niedrigen Verunreinigungsgraden der Rohstoffe, aus denen sie geschmolzen wurden, leiten das Licht möglichst dämpfungsarm über die gesamte Lichtleiterlänge.

Die Rohstoffe zum Erschmelzen solcher Kerngläser sind aufgrund ihrer hohen Reinheit recht teuer, was zu erheblichen Herstellkosten solcher Fasern bzw. daraus hergestellter Lichtleiter führen kann.

Neben der Lichtmenge, die ein faseroptischer Lichtleiter überträgt, spielt häufig auch eine farbsticharme Übertragung des Lichtes durch ihn eine bedeutende Rolle. Aufgrund der spektralen Transmissionsabhängigkeit des Kernglases, das die Fasern enthalten, erfolgt eine mehr oder weniger starke Farbverschiebung des Farbortes der eingekoppelten Lichtquelle, was sich meist in einem Gelbstich des aus dem Lichtleiter austretenden Lichtes bemerkbar macht. Dies wirkt sich überall dort störend aus, wo es auf farbneutrale Wiedergabe ankommt z.B. in der medizinischen Endoskopie bei fotografischer Bilddokumentation zur Differenzierung von z.B. gesundem und malignem Gewebe u.a.m.

Die Herstellung optischer Stufenfasern aus Mehrkomponentengläsern erfolgt entweder über das sogenannte Doppeltiegel- oder das Stab-Rohr-Verfahren. In beiden Fällen werden Kern- und Mantelglas auf Temperaturen erhitzt, die einem Viskositätsbereich zwischen 10⁴ bis 10³ dPs entsprechen und dabei zu einer Faser ausgezogen. Damit eine stabile Faser niedriger Dämpfung hergestellt werden kann, müssen Kern- und Mantelglas in einer Reihe von Eigenschaften wie Viskositätsverlauf, thermischer Ausdehnung, Kristallisationsneigung u.a.m. kompatibel zueinander sein. Insbesondere darf es in der Grenzfläche zwischen Faserkern und -mantel nicht zu Kontaktreaktion bzw. Kristallisation kommen, was eine Totalreflexion des im Faserkern geführten Lichtes empfindlich stören und damit die Faser für die Anwendung zur dämpfungsarmen Lichtübertragung untauglich machen würde. Darüber hinaus würde auch die mechanische Festigkeit der Faser durch Kristallisation negativ beeinträchtigt.

Nach dem Stand der Technik sind mindestens drei unterschiedliche Fasersysteme bekannt, die für solche Anwendungen in Frage kommen.

Das wohl bekannteste und am weitesten verbreitete Fasersystem besteht aus einem hochbleihaltigen Kernglas (meist ≥ 35% PbO) und einem Alkaliborosilikatglas als Mantelglas. Sein Vorteil liegt in der erreichbaren hohen Numerischen Apertur (bis > 0,7 bei PbO-Anteilen des Kernglases von > 50%) bei niedrigen Herstellkosten und einer guten Ziehbarkeit zu Fasern ohne Kristallisationsprobleme.

Demgegenüber stehen Nachteile wie mittlere bis schlechte Dämpfung (≥ 200 bis 300 dB/km) sowie vergleichsweise starker Farbstich, hauptsächlich bedingt durch Pb- Eigenabsorption (Blaukante des sichtbaren Spektrums) sowie eingeschleppte Verunreinigungen an stark färbenden Elementen wie Chrom und Nickel. Zudem ist Blei als umweltbelastender Stoff mehr und mehr in Verruf geraten und kommt daher für Fasern in spezifischen Anwendungsfeldern nur noch mit Einschränkungen oder gar nicht mehr zum Einsatz.

Ein zweites Fasersystem besteht aus einem Alkaliborosilikatglas, das sowohl als
Kern- als auch als Mantelglas zum Einsatz kommt.

In der Patentliteratur sind verschiedene solcher Glassysteme beschrieben, z.B.
in der EP 0018110 oder der EP 0081928, beide von British Post Office. Auch in der japanischen Patentliteratur sind entsprechende Glaszusammensetzungen für optische Fasern veröffentlicht, so z.B. von NSG das deutsche Patent DE 29 40 451 C2 oder das amerikanische Patent US 4,264,131 von Tokyo Shibaura Denki Kabushiki Kaisha. Diese Gläser enthalten neben einem hohen Boranteil auch hohe Anteile an Erdalkali und/oder Zirkon- und Germaniumoxid, um die gewünschte hohe Brechzahl zu erreichen.

Ihr Vorteil liegt in der außerordentlich niedrigen Dämpfung (z.T. bei ≤ 10 dB/km) und sehr niedrigem Farbstich bei gleichzeitig meist umweltfreundlichen Rohstoffen (mit Ausnahme der Varianten, die einen hohen Ba-Anteil enthalten, z.B. DE 2940451 C2). Ein Nachteil dieses Glassystems besteht in der meist kleineren NA der Fasern sowie einer nicht sehr hohen chemischen Beständigkeit. Letzteres bedingt, dass die Fasern direkt bei ihrer Herstellung unmittelbar nach dem Ziehen z.B. aus der Düse am Doppeltiegel online mit einem Kunststoffmantel als Schutz gegen möglichen chemischen und/oder mechanischen Angriff versehen werden. Darüber hinaus wird die niedrige Dämpfung durch Verwendung hochreiner und damit sehr teurer Rohstoffe erkauft.

Beide letztgenannte Aspekte, hohe Herstellkosten und Kunststoffmantel, machen damit die Verwendung als Bündelfaser für breitere Anwendungen praktisch nicht mehr möglich. Vielmehr finden sie als Einzelfaser zur Datenoder Energieübertragung (Laserfaser) in einer Vielzahl spezieller Applikationen Verwendung.

Auch Fasern auf reiner Quarzbasis als drittes Fasersystem kommen prinzipiell als Bündelfaser zur Lichtübertragung in Frage.

Ihren Vorzügen einer extrem niedrigen Dämpfung (bis ≤ 6 dB/km), sehr guter Farbneutralität und guter Umweltverträglichkeit stehen als gravierendster Nachteil die hohen Kosten gegenüber. Reines Quarzmaterial ist aufgrund der hohen Verarbeitungstemperaturen extrem teuer; hinzu kommt ein aufwendiger Dotierungsprozess, der sogenannten Preform, bei dem durch Einbau von Fluor in die Oberfläche eines zylindrischen Stabes die notwendige Brechzahlerniedrigung des reinen Quarzes erzielt wird, die als optische Isolation zur Lichtübertragung in der späteren Faser notwendig ist. Zudem ist die erreichbare NA von Quarzfasern recht begrenzt (≤ 0,22).

Die US 4,573,762 und JP 54-087236 A offenbaren eine Stufenfaser mit einem Kernglas und einem Mantelglas. Bei der erstgenannten Schrift ist die Numerische Apertur stets kleiner als 0,5.

Es ist nun Aufgabe der vorliegenden Erfindung eine Faser bereitzustellen, die ein möglichst breites Anwendungsfeld, insbesondere als Bündelfaser bzw. als faseroptischer Lichtleiter, hat. Sie sollte sich auszeichnen durch:
- eine hohe Numerische Apertur (≥ 0,50)
- eine niedrige bis mittlere Dämpfung im gesamten sichtbaren Spektralbereich
- geringen Farbstich
- niedrige Herstellkosten
- gute Ziehbarkeit, d.h. ohne Tendenz zu Kristallisation oder Grenzflächenreaktion bei der Herstellung
- umweltfreundlichere Rohstoffkomponenten der zugehörigen Kern- und Mantelgläser im Vergleich z. B. zu stark bleihaltigen Flintgläsern.

Eine weitere Teilaufgabe besteht darin, eine vollständig oder zumindest nahezu bleifreie Faser mit einer Numerischen Apertur ≥ 0,48 und den vorstehend genannten Eigenschaften zu entwickeln.

Eine zusätzliche Teilaufgabe besteht darin, eine Verwendung der optischen Stufenfasern bereitzustellen.

Die Aufgabe wird erfindungsgemäß mit einer optischen Stufenfaser gelöst, die ein Kernglas und ein das Kernglas vollständig an seiner Umfangswand umschließendes Mantelglas umfasst, wobei das Kernglas eine Zusammensetzung aus 42 bis 53 Gew.% SiO₂, 16 bis 38 Gew.% ZnO, 1 bis 20 Gew.% PbO, wobei die Summe aus ZnO und PbO ≥ 30 Gew.% beträgt, < 14 Gew.% Na₂O, < 12 Gew.% K₂O, wobei die Summe aus Na₂O und K₂O ≥ 2 Gew.% beträgt, und das Mantelglas eine Zusammensetzung aus 60 bis 72 Gew.% SiO₂, < 20 Gew.% B₂O₃, < 10 Gew.% Al₂O₃, < 18 Gew.% Na₂O, < 15 Gew.% K₂O sowie Läutermittel in den üblichen Mengen aufweist.

Für einen Einsatzfall, bei dem eine bleifreie Stufenfaser eingesetzt werden soll, wird die Aufgabe mit einer Stufenfaser gelöst, deren Kernglas eine Zusammensetzung aus 42 bis 53 Gew.% SiO₂, 30 bis 38 Gew.% ZnO, < 14 Gew.% Na₂O, < 12 Gew.% K₂O, wobei die Summe aus Na₂O und K₂O ≥2 Gew.% beträgt, < 0,9 Gew.% BaO und das Mantelglas eine Zusammensetzung aus 60 bis 72 Gew.% SiO₂, < 20 Gew.% B₂O₃, < 10 Gew.% Al₂O₃, < 18 Gew.% Na₂O, < 15 Gew.% K₂O. Das Mantelglas kann Läutermittel aufweisen.

In der Offenlegungsschrift DE 199 58 522 A1 werden zinkhaltige optische Gläser beschrieben mit Brechzahlen n_{d} zwischen 1,52 und 1,66. Neben ZnO enthalten diese Gläser zumeist auch PbO in unterschiedlichen Prozentsätzen sowie hauptsächlich Alkalien und einige wenige andere Elemente wie B, Ba, Mg, Ca, Al, Y, Zr und Ge. Insgesamt werden 24 Beispiele genannt.

Die meisten der dort angegebenen Gläser zeichnen sich aus durch eine hohe Reintransmission und gute Farbneutralität. Neben diesen optischen Eigenschaften weisen die Gläser auch eine gute Kristallisationsstabilität und Schmelzbarkeit auf. Die Gesamtheit dieser Eigenschaften lassen diese Gläser als potentielle Kernglaskandidaten für optische Stufenfasern in Frage kommen, sofern ein geeignetes, kompatibles Mantelglas gefunden werden kann.

Obwohl zinkhaltige optische Gläser stärker zu Kristallisation neigen als bleihaltige,
konnten aus dem in der DE 199 58 522 A1 zugrundeliegendem Glassystem Gläser gefunden werden, die zur Herstellung von Fasern geeignet sind.

Dabei ergab sich erfindungsgemäß ein bevorzugtes kleines Gebiet, das sich mit nur einem Mantelglastyp ganz spezifischer Zusammensetzung zu einer Faser mit besonders niedriger Dämpfung ziehen ließ. Außerhalb dieses Gebietes wächst entweder die Dämpfung deutlich auf oder über die der Bleigläser mit gleicher NA hinaus an oder in der Grenzfläche der betreffenden Fasern setzt beginnende Kristallisation ein, so dass keine brauchbare Faser mehr hergestellt werden konnte.

Andererseits zeigten Versuche, Kernglas aus dem optimalen Zusammensetzungsbereich mit anderen Mantelgläsern als dem o.g. zu Fasern zu ziehen, Dämpfungsergebnisse, die, je nach Glastyp, um bis zu einem Faktor > 3 schlechter waren, als bei dem erfindungsgemäßen Mantelglastyp. Mit anderen Worten: Aus den in DE 199 58 522 A1 angegebenen zinkhaltigen optischen Gläsern konnte ein begrenzter Zusammensetzungsbereich gefunden werden, so dass sich Kerngläser aus diesem Bereich mit einem erfindungsgemäßen Mantelglas zu Fasern ziehen lassen. Mit der Bereitstellung dieser Fasern wird die Aufgabe der vorliegenden Erfindung in besonders geeigneter Weise erfüllt. Eine Faser gemäß Anspruch 1
- hat eine große Numerische Apertur von ≥ 0,50
- besitzt eine niedrige Dämpfung von 80 dB/km bis 165 dB/km, abhängig von der
   Reinheit der verwendeten Rohstoffe
- zeigt einen geringen Farbstich (Δ D (451 nm/553 nm) < 205 dB/km)
- hat geringe Herstellkosten
- zeigt eine gute Ziehbarkeit
- besteht weitgehend aus umweltschonenden Rohstoffkomponenten.

Lässt man die o.g. Forderung nach einer NA ≥ 0,50 fallen und reduziert diese auf NA ≥ 0,48, so läßt sich bei Einsatz eines Kernglases gemäß Anspruch 4 eine bleifreie Faser herstellen, die ansonsten praktisch alle anderen positiven Eigenschaften des Kerngiases gemäß des Anspruchs 1 aufweist. Entsprechende Beispiele sind in der Tabelle 1 als Kernglasvarianten 5 bis 8 dargestellt.

Im folgenden wird beschrieben, wie durch gezielte Versuche aus den in DE 199 58 522 A1 beschriebenen zinkhaltigen Kerngläsern und mehreren unterschiedlichen Mantelgläsern die erfindungsgemäße Faser entwickelt und hergestellt wurde. Gleichzeitig werden Abgrenzungsbereiche genannt, wo entweder die Faserdämpfung auf ein Niveau entsprechend dem Stand der Technik (oder schlechter) ansteigt oder ein Faserziehen aufgrund von Kontaktreaktion/ Kristallisation nicht mehr sinnvoll möglich ist.

Wie oben bereits erwähnt werden optische Stufenfasern aus
Mehrkomponenten-gläsern entweder nach dem Doppeltiegel- oder dem Stab-Rohr-Verfahren hergestellt.
Im vorliegenden Fall wurde ausschließlich das Stab-Rohr-Verfahren verwendet, da ein Doppeltiegel nicht verfügbar war und die verschiedenen Mantelgfasvarianten bereits in Rohrform vorlagen.

Beim Stab-Rohr-Verfahren werden ein zylindrischer Stab aus hochbrechendem Kernglas und das ihn umgebende Rohr aus niedrigbrechendem Mantelglas in einem zylindrischen Ofen auf eine Temperatur entsprechend einer Zähigkeit von etwa 10⁴ bis 10³ dPas erhitzt. Kern- und Mantelglas verschmelzen dabei zu einer sogenannten Ziehzwiebel, aus der die optische Faser gezogen wird. Der Faserdurchmesser hängt dabei ab vom Verhältnis der Faserziehgeschwindigkeit zur Nachführgeschwindigkeit des Stab-Rohr-Systems und den Abmessungen von Kernstab und Rohr. Besondere Sorgfalt ist bei diesem Verfahren darauf zu legen, dass die Kernstaboberfläche und die Rohrinnenfläche extrem sauber und frei von jeglichem Schmutz und Partikeln sind, damit sie zu einer möglichst idealen, störungsfreien Grenzfläche der Faser verschmelzen können. Ebenso hat sich als vorteilhaft erwiesen, wenn Außendurchmesser des Kernstabs und Innendurchmesser des Rohrs sich nur um wenige Zehntel mm unterscheiden, so dass sich eine gleichmäßige faltenfreie Ziehzwiebel ausbilden kann.

Die benötigten Kernglasstäbe unterschiedlicher Glaszusammensetzung wurden nun wie folgt hergestellt:

Für jede gewählte Glaszusammensetzung aus DE 199 58 522 A1 wurde eine 4 I- Schmelze entsprechend den dortigen Vorgaben geschmolzen und in eine Barrenform ( ca. 400 mm x 200 mm x 50 mm) gegossen. Hieraus wurden jeweils 2 - 3 zylindrische Stäbe, ca. 300 mm lang und einem Durchmesser von 30mm mechanisch herausgearbeitet. Im letzten Bearbeitungsschritt erhielten die Stäbe eine feinoptische Politur, um die o.g. Anforderungen an eine ideale Grenzfläche zu erfüllen. Insgesamt wurden 15 unterschiedliche Kernglastypen aus dem Bereich der o.g. Erfindungsmeldung geschmolzen und zu Kernglasstäben verarbeitet, z.T. mit gleichen Glaszusammensetzungen wie die angegebenen Beispiele, z.T. auch mit anderen Zusammensetzungen.

Die zum Faserziehen benötigten verschiedenen Mantelgläser lagen, wie oben erwähnt, in geeigneter Rohrform vor (Innendurchm.: ∼ 31 mm, Außendurchm.: ~ 34 mm bis 35 mm). Als maschinenhergestellte, aus einer Pt-Düse gezogene Rohre, waren deren Abmessungen eng kalibriert, so dass keine zusätzliche mechanische Bearbeitung erforderlich war. Lediglich vor der Zusammenstellung zu einem Stab-Rohr-System kurz vor dem Ziehvorgang wurden Kernstab und Rohr in einem US-Bad nach gängigem Verfahren sorgfältig gereinigt um eine optimale Grenzfläche bei der Verschmelzung beim Ziehprozeß zu gewährleisten.

Das Ausziehen zur Faser erfolgte an einer Stab-Rohr-Ziehmaschine mit zylindrischem Ofen nach dem Stand der Technik. Es wurden ausschließlich Fasern mit 70 µm Durchmesser gezogen. Dies entspricht einem weltweit verbreiteten Standard, der sich für Mehrkomponentenfasern, die fast ausschließlich zu Bündelfasern verarbeitet werden, eingebürgert hat. Die Messung der Dämpfung erfolgte nach dem sogenannten Rückschneideverfahren (DIN 58 141 -1).

Als Verwendung der optischen Stufenfaser kommt sowohl die Licht- als auch die Datenübertragung in Betracht. Typische Anwendungen für die Lichtübertragung sind beispielsweise die Automobilindustrie (Fahrzeugbeleuchtung innen und außen), die Medizintechnik (Endoskopie, Operationsmikroskopie) sowie die Signaltechnik (Verkehrszeichengeber, Bahnsignalisation) und alphanumerische Anzeigesysteme. Anwendungen für die Datenübertragung finden sich gleichfalls in der Automobilindustrie aber auch in der allgemeinen Industrie- und Haustechnik.

### Beispiele

Die Zusammenstellung von Kern- und Mantelgläsern unterschiedlicher Glaszusammensetzung erfolgte nach dem Prinzip, den Eigenschaftskatalog der daraus hergestellten Fasern erfindungsgemäß zu optimieren. Dabei standen eine große Numerische Apertur, niedrige Dämpfung, geringe Herstellkosten sowie Umweltverträglichkeit der verwendeten Rohstoffe im Vordergrund. Natürlich musste auch eine kristallisationsfreie Ziehbarkeit der Faser gewährleistet sein.

In einer ersten Versuchsreihe wurden mit nur einem Mantelglas, dem Alkali-Borosilikat-Glas gemäß Tabelle 2, Mantelglasvariante 1, das sich als besonders vorteilhaft erwiesen hatte, unterschiedliche Kernglasvarianten zu Fasern gezogen. Aus der Gesamtzahl von 8 untersuchten Kernglaszusammensetzungen ergab sich folgendes Ergebnis der daraus hergestellten Fasern (s. Tab.1).

Unter der Aufgabenstellung eine Faser mit NA ≥ 0,50 zu liefern, zeigt Kernglasvariante 1 das absolut niedrigste Dämpfungsniveau (80 dB/km bei 553 nm bei sehr guter Reinheit der eingesetzten Rohstoffkomponenten). Sie enthält nur noch einen Anteil von 3,5 % PbO und ergibt mit dem Alkali-Borosilikatglas Typ1 in Tabelle 2 eine Numerische Apertur von 0,522.

Kernglaszusammensetzungen mit niedrigerem PbO-Gehalt z.B. 1,3% verschlechtern die Dämpfung und zeigen beginnende Kristallisation. Bei PbO-Gehalten > 3,5% ist zwar gute Ziehbarkeit gewährleistet (Kernglasvarianten 3 und 4), allerdings steigt die Dämpfung wieder deutlich an. Ab einem PbO-Gehalt > 19 Gew.% wird in etwa wieder die Dämpfung der ursprünglichen Faser erreicht. Der genaue Zahlenwert hängt von der Rohstoffqualität ab. Außerdem ist es vorteilhaft, den toxischen Bestandteil PbO so wenig wie möglich zu verwenden. Der maximale PbO-Gehalt wird daher auf 20 Gew.% beschränkt, in einer bevorzugten Ausführungsform auf 12 Gew.%. Für einen sicheren Ziehprozess wird die minimale Konzentration auf 2 Gew.% PbO festgelegt.

**Tab. 1**

| **Glaszusammensetzung (Gew.%)** | 1 | 2 | 3 | 4 | 5 | 6 | 7 | 8 | **konventionelles Kernglas (Leichtflint)** |
|---|---|---|---|---|---|---|---|---|---|
| SiO₂ | 44,6 | 44,6 | 45,8 | 50,9 | 46,4 | 47,7 | 48,3 | 48,6 | 53 |
| ZnO | 34,8 | 37,5 | 29,5 | 17,6 | 37,3 | 34,4 | 31,6 | 33,0 | - |
| PbO | 3,5 | 1,3 | 8,0 | 19,4 | - | - | - | - | 34 |
| Na₂O | 8,0 | 9,4 | 9,0 | 8,2 | 8,3 | 8,3 | 8,1 | 8,2 | 5,9 |
| K₂O | 8,9 | 7,0 | 7,5 | 3,7 | 5,8 | 5,8 | 9,1 | 9,1 | 6,9 |
| Li₂O | - | - | - | - | 1,1 | 0,9 | - | - | - |
| BaO | - | - | - | - | 0,8 | 0,8 | 0,8 | 0,8 | - |
| ZrO₂ | - | - | - | - | - | 1,8 | 1,8 | - | - |
| Läutermittel | 0,2 | 0,2 | 0,2 | 0,2 | 0,3 | 0,3 | 0,3 | 0,3 | 0,2 |
| n_{d} | 1,576 | 1,58 | 1,58 | 1,58 | 1,58 | 1,58 | 1,57 | 1,567 | 1,581 |
| NA | 0,522 | 0,534 | 0,534 | 0,534 | 0,534 | 0,534 | 0,504 | 0,494 | 0,537 |

| Faser-Dämpfung [dB/km] bei λ(nm): | | | | | | | | | |
|---|---|---|---|---|---|---|---|---|---|
| 401 | 272 | 263 | 338 | 628 | 397 | 360 | 273 | 171 | 634 |
| 451 | 170 | 251 | 190 | 370 | 335 | 334 | 282 | 153 | 427 |
| 553 | 80 | 117 | 86 | 165 | 228 | 163 | 140 | 96 | 226 |
| Kontaktreaktion Kern/ Mantelglas | nein | beginnend | nein | nein | nein | nein | nein | nein | nein |

Dieser Sachverhalt beschränkt sich jedoch auf die Kernglasvarianten, die sich nur aus fünf Rohstoffkomponenten SiO₂, ZnO, PbO, Na₂O und K₂O zusammensetzen.

Für bleifreie Kernglasvarianten, die sich mit einem geeigneten Mantelglas gut zu Fasern ziehen lassen, muss das fehlende PbO durch eine oder mehrere zusätzliche Rohstoffkomponenten ersetzt werden. Als besonders gut geeignete Kandidaten erwiesen sich hier die Komponenten Li₂O, BaO und ZrO₂, die in unterschiedlichen Zusammensetzungsverhältnissen in den Kernglasvarianten erprobt wurden (s. Tab. 1).

Bei Verwendung von wenigstens Li₂O und BaO bzw. Li₂O, BaO und ZrO₂ konnte eine NA > 0,53 der Faser erzielt werden. Dieses geschieht allerdings zu Lasten der Dämpfung, die dabei auf ein mittleres Niveau von 160 bis 230 dB/km absinkt, was allerdings immer noch niedriger liegt als das von herkömmlichen Flintglasfasern (vergl. Kernglasvarianten 5 und 6, Tab. 1).

Fehlt im Kernglas die Rohstoffkomponente Li₂O und fügt man BaO und ZrO₂ oder nur BaO hinzu, so wird die NA der Faser auf ≥ 0,50 bzw. 0,48 abgesenkt, allerdings zugunsten einer niedrigeren Dämpfung (s. Kernglasvarianten 7 und 8).

Weiterhin wird bei einer vergleichenden Betrachtung der Kernglasvarianten 7 und 8 deutlich, dass ZrO₂ eine starke Verschlechterung der Dämpfung bewirkt. Andererseits ist bekannt, dass die Zugabe von ZrO₂ eine Erhöhung der chemischen Beständigkeit des Glases und damit auch der Faser bewirkt. Entsprechende Fasern eignen sich daher besonders zum Einsatz in härteren Umgebungsbedingungen. Der Fachmann ist daher in der Lage, durch wechselnde Verwendung der Komponenten PbO, Li₂O, BaO und ZrO₂ je nach Anforderung an Brechwert/NA, Dämpfung, chemische Resistenz und Umweltverträglichkeit eine optimale Faser herzustellen.

Die letzte Spalte von Tab.1 zeigt die Glaszusammensetzung eines konventionellen Leichtflintglases sehr guter Transmission mit zugehörigen Dämpfungswerten. Es ist erkennbar, dass die erfindungsgemäße Variante 1 eine fast um den Faktor 3 niedrigere Dämpfung aufweist bei annähernd gleicher NA, jedoch bei einem um den Faktor 10 niedrigeren PbO-Gehalt.

Sogar die bleifreie Variante 8 zeigt noch eine um einen Faktor größer 2 niedrigere Dämpfung (553 nm) als das konventionelle Leichtflintglas. In der praktischen Anwendung bedeutet dies, dass Fasern aus der erfindungsgemäßen Kernglas-/Mantelglas-Zusammensetzung Licht über eine um den Faktor 2 bis 3 längere Strecke bei gleicher Intensität übertragen können, als herkömmliche Fasern mit einem Leichtflintkernglas.

Umgekehrt kann bei gleicher Übertragungslänge und gleicher Gesamtintensität des übertragenen Lichtstroms durch einen entsprechenden Lichtleiter, dessen Querschnitt verringert werden, wenn Fasern mit niedrigerer Dämpfung eingesetzt werden.

Ein Beispiel soll dies für den Fall der optimierten Kernglasvariante 1 (s. Tab.1, 80 dB/km) im Vergleich zum konventionellen Leichtflintglas (s. letzte Spalte, 226 dB/km) für die Wellenlänge λ = 553 nm und einer Übertragungslänge von 20 m verdeutlichen. In diesem Fall ist nur die Hälfte des Bündelquerschnitts eines Lichtleiters mit Fasern der Kernglasvariante 1 notwendig, um die gleiche Lichtmenge bei der gegebenen Länge von 20 m zu übertragen wie bei einem Lichtleiter mit herkömmlichen Flintglasfasern. Dies bedeutet in der Praxis eine erhebliche Kosteneinsparung aufgrund des geringeren Faserbedarfs.

Ein Gegenbeispiel einer ungeeigneten bleifreien Kernglasvariante stellt ein Glas mit 44,7 Gew.% SiO₂, 39,9 Gew.% ZnO, 7,9 Gew.% Na₂O, 7,3 Gew.% K₂O sowie 0,2 Gew.% Läutermittel dar. Das als Gegenbeispiel dienende Kernglas weist zwar eine Brechzahl n_{d} von 1,58 und eine NA von 0,534 auf, zeigt jedoch aufgrund der starken Kristallisation an der Grenzfläche von Kernglas zu Mantelglas keine messbare Dämpfung im betrachteten Bereich von 401 nm bis 553 nm und ist somit nicht für eine Verwendung in einer Faser geeignet.

In einer zweiten Versuchsreihe wurde nun versucht, mit nur einem Kernglastyp, der o.g. Bestvariante Nr.1, und Mantelgläsern verschiedener Zusammensetzungen Fasern zu ziehen. Insgesamt wurden mit 5 unterschiedlichen Mantelgläsern Ziehversuche durchgeführt.

**Tab. 2**

| **Glaszusammensetzung** | **Mantelglasvarianten** | | | | |
|---|---|---|---|---|---|
| Gew. -% | 1 | 2 | 3 | 4 | 5 |
| SiO₂ | 69 | 70 | 68 | 81 | 75 |
| B₂O₃ | 19 | 1 | 3 | 12 | 10 |
| Al₂O₃ | 3 | 4 | 8 | 2,5 | 5 |
| Na₂O | 1 | 13 | 15 | 3,5 | 7 |
| K₂O | 8 | 2,3 | | 1 | 0,1 |
| Li₂O | | | 1 | | |
| MgO | | 2,5 | | | |
| BaO | | 2 | | | 0,6 |
| CaO | | 5 | 3 | | 1,4 |
| ZnO | | | 1,5 | | |
| F | | 0,2 | 0,5 | | 0,2 |

**Tab. 3**

| **Mantelglastyp** | **Kernglas** | **Faserdämpfung (dB/km) bei λ (nm)** | | | | **Entglasung/ Kontaktreaktion** |
|---|---|---|---|---|---|---|
| | | **400** | **452** | **554** | **642** | |
| Mantelglas 1 | Kernglasvariante 1 | 365 | 264 | 131 | 161 | nein |
| Mantelglas 2 | | 461 | 346 | 213 | 252 | nein |
| Mantelglas 3 | | 521 | 402 | 263 | 293 | sehr schwach |
| Mantelglas 4 | | 670 | 565 | 425 | 445 | beginnend |
| Mantelglas 5 | | 1897 | 1863 | 1727 | 1748 | stark |
| Mantelglas 1 | Kernglasvariante 8 (bleifrei) | 171 | 153 | 96 | 113 | nein |

Die Tab. 2 zeigt die jeweilige Zusammensetzung der ausgewählten Mantelgläser. Dabei handelt es sich um drei Alkaliborosilicatgläser, Nr.1, 4 und 5 sowie je ein Natronkalkglas (Nr.2) und Alkali-Alumosilikatglas (Nr.3).

Das Ergebnis der Dämpfungsmessungen an den so hergestellten unterschiedlichen Fasertypen zeigt in tabellarischer Form Tab. 3 und als grafische Kurvenschar die Zeichnungsfigur.

Wie oben bereits erwähnt liefert nur das Mantelglas Alkaliborosilikat-Typ1 Bestwerte bzgl. Faserdämpfung (131 dB/km bei λ = 554 nm; Anmerkung: dass der Dämpfungswert hier nicht wie in Tab.1 bei 80 dB/km liegt hat seine Ursache darin, dass für das Kernglas ganz bewusst in dieser Schmelzserie kostengünstigere Rohstoffkomponenten mit etwas höheren Verunreinigungsgraden eingesetzt wurden).

Schon die zweitbeste Faservariante mit Natronkalkglas (Mantelglas 2) als Mantelmaterial liegt im gesamten gemessenen Spektralbereich auf einem deutlich schlechteren Dämpfungsniveau (ca. 30% bis 60% höhere Werte, abhängig von der Wellenlänge). Das Mantelglas 3, ein Alkali-Alumosilikatglas, in Verbindung mit der Kernglasvariante 1 liegt praktisch im gesamten Wellenlängenbereich bei einer nahezu um den Faktor zwei schlechteren Dämpfung als die Bestvariante mit einem Mantelglas 1.

Erstaunlich ist außerdem, dass andere Fasern mit Mantelgläsern aus der gleichen Glasfamilie der Borosilikatgläser wie die Bestvariante 1, nämlich Nr. 4 und 5 mit Abstand die schlechtesten Dämpfungsergebnisse liefern. Hier setzt in der Grenzfläche offenbar eine beginnende (Nr.4) bzw. bereits starke Entglasung (Nr. 5) ein. Allerdings muss erwähnt werden, dass die Zusammensetzung dieser beiden Mantelgläser sich von der des Borösilikatglas Typ 1 doch deutlich unterscheidet (s. Tab. 2), insbesondere durch einen niedrigeren Borgehalt und höheren Siliziumanteil (Nr.4) bzw. zusätzliche Bestandteile wie Ba, Ca und F (Nr.5).

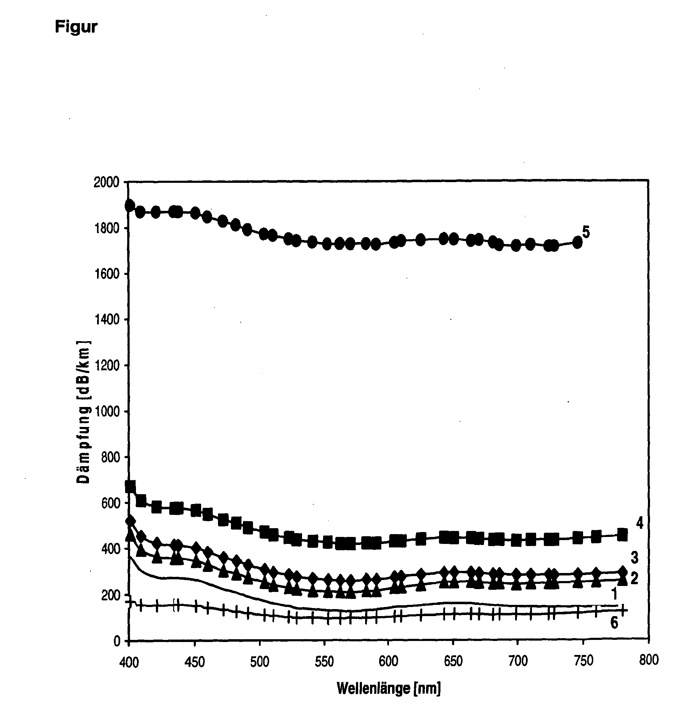

In der Figur ist der Dämpfungsverlauf von Fasern mit gleichem, optimalen Kernglas entsprechend der Kernglasvariante 1 in Tabelle 1 allerdings mit schlechterer Rohstoffqualität und unterschiedlichen Mantelgläsern dargestellt, wobei die Ziffern 1 bis 5 an der jeweiligen Kurve den unterschiedlichen Mantelglasvarianten 1 bis 5 in Tabelle 2 entsprechen. Zusätzlich hierzu ist in der Figur der mit der Ziffer 6 bezeichnete Kurvenverlauf der bleifreien Faservariante aus der Kernglasvariante 8 (s. Tab. 1 ) und der Mantelglasvariante 1 (s. Tab. 2) zu erkennen, welche in dem gesamten betrachteten spektralen Bereich die niedrigste Dämpfung mit unter 200 dB/km aufweist.

## Patentansprüche

1. Optische Stufenfaser aus Mehrkomponentengläsern umfassend ein Kernglas und ein das Kernglas vollständig an seiner Umfangswand umschließendes Mantelglas mit einer Numerischen Apertur ≥ 0,50, wobei das Kernglas eine Zusammensetzung aufweist mit:
| | |
|---|---|
| SiO₂ | 42 bis 53 Gew.% |
| ZnO | 16 bis 38 Gew.% |
| PbO | 1 bis 20 Gew.% |
| mit ZnO + PbO | ≥ 30 Gew.% |
| Na₂O | < 14 Gew.% |
| K₂O | < 12 Gew.% |
| Na₂O + K₂O | ≥ 2 Gew.% |
und das Mantelglas eine Zusammensetzung aufweist mit
| | |
|---|---|
| SiO₂ | 60 bis 72 Gew.% |
| B₂O₃ | < 20 Gew.% |
| Al₂O₃ | < 10 Gew.% |
| Na₂O | < 18 Gew.% |
| K₂O | < 15 Gew.% |

2. Optische Stufenfaser nach Anspruch 1,
**dadurch gekennzeichnet,**
**dass** das Mantelglas und/oder das Kernglas Läutermittel enthält.

3. Optische Stufenfaser nach Anspruch 1 oder 2, wobei das Kernglas einen PbO-Gehalt von 2 bis 12 Gew.% aufweist.

4. Optische Stufenfaser nach einem der Ansprüche 1 bis 3, wobei das Kernglas einen BaO-Gehalt < 0,9 Gew.% aufweist.

5. Optische Stufenfaser aus Mehrkomponentengläsern umfassend ein Kernglas und ein das Kernglas vollständig an seiner Umfangswand umschließendes Mantelglas mit einer Numerischen Apertur ≥ 0,48, wobei das Kernglas eine Zusammensetzung aufweist mit:
| | |
|---|---|
| SiO₂ | 42 bis 53 Gew.% |
| ZnO | 30 bis 38 Gew.% |
| Na₂O | < 14 Gew.% |
| K₂O | < 12 Gew.% |
| Na₂O + K₂O | ≥ 2 Gew.% |
| BaO | < 0,9 Gew.% |
und das Mantelglas eine Zusammensetzung aufweist mit
| | |
|---|---|
| SiO₂ | 60 bis 72 Gew.% |
| B₂O₃ | < 20 Gew.% |
| Al₂O₃ | < 10 Gew.% |
| Na₂O | < 18 Gew.% |
| K₂O | < 15 Gew.% |

6. Optische Stufenfaser nach Anspruch 5,
**dadurch gekennzeichnet,**
**dass** das Mantelglas Läutermittel enthält.

7. Optische Stufenfaser nach Anspruch 5 oder 6, wobei das Kernglas zusätzlich einen PbO-Gehalt < 1 Gew.% aufweist.

8. Optische Stufenfaser nach einem der Ansprüche 1 bis 7, wobei das Kernglas einen F-Gehalt < 2 Gew.% aufweist.

9. Optische Stufenfaser nach Anspruch 8, wobei das Kernglas einen F-Gehalt < 0,5 Gew.% aufweist.

10. Optische Stufenfaser nach einem der Ansprüche 1 bis 9, wobei das Kernglas einen Li₂O -Gehalt < 3 Gew.% aufweist.

11. Optische Stufenfaser nach einem der Ansprüche 1 bis 10, wobei im Kernglas die Summe der Komponenten Li₂O, Na₂O und K₂O ≥ 2 Gew.% ist.

12. Optische Stufenfaser nach Anspruch 11, wobei im Kernglas die Summe der Komponenten Li₂O, Na₂O und K₂O ≥ 5 Gew.% ist.

13. Optische Stufenfaser nach einem der Ansprüche 1 bis 12, wobei das Kernglas einen ZrO₂-Gehalt < 2 Gew.% aufweist.

14. Optische Stufenfaser nach einem der Ansprüche 1 bis 13, wobei das Kernglas einen MgO-Gehalt < 6 Gew.% aufweist.

15. Optische Stufenfaser nach einem der Ansprüche 1 bis 14, wobei das Kernglas einen CaO-Gehalt < 5 Gew.% aufweist.

16. Optische Stufenfaser nach einem der Ansprüche 1 bis 15, wobei das Kernglas einen SrO-Gehalt < 6 Gew.% aufweist.

17. Optische Stufenfaser nach einem der Ansprüche 1 bis 16, wobei das Kernglas einen B₂O₃-Gehalt < 1 Gew.% aufweist.

18. Optische Stufenfaser nach einem der Ansprüche 1 bis 17, wobei das Kernglas einen Al₂O₃-Gehalt < 1,5 Gew.% aufweist.

19. Optische Stufenfaser nach einem der Ansprüche 1 bis 18, wobei das Mantelglas einen Li₂O-Gehalt < 2 Gew.% aufweist.

20. Optische Stufenfaser nach einem der Ansprüche 1 bis 19, wobei das Mantelglas einen MgO-Gehalt < 3 Gew.% aufweist.

21. Optische Stufenfaser nach einem der Ansprüche 1 bis 20, wobei das Mantelglas einen BaO-Gehalt < 3 Gew.% aufweist.

22. Optische Stufenfaser nach einem der Ansprüche 1 bis 21, wobei das Mantelglas einen SrO-Gehalt < 4 Gew.% aufweist.

23. Optische Stufenfaser nach einem der Ansprüche 1 bis 22, wobei das Mantelglas einen CaO-Gehalt < 6 Gew.% aufweist.

24. Optische Stufenfaser nach einem der Ansprüche 1 bis 23, wobei das Mantelglas einen ZnO-Gehalt < 3 Gew.% aufweist.

25. Optische Stufenfaser nach einem der Ansprüche 1 bis 24, wobei das Mantelglas einen F-Gehalt < 1 Gew.% aufweist.

26. Optische Stufenfaser nach einem der Ansprüche 1 bis 25, wobei im Mantelglas die Summe der Komponenten Li₂O, Na₂O und K₂O ≥ 3 Gew.% ist.

27. Optische Stufenfaser nach einem der Ansprüche 1 bis 26, wobei das Mantelglas einen SiO₂-Gehalt von 66 bis 72 Gew.% aufweist.

28. Verwendung einer optischen Stufenfaser nach einem der Ansprüche 1 bis 27 zur Übertragung von Licht.

29. Verwendung einer optischen Stufenfaser nach einem der Ansprüche 1 bis 27 in einem Faserbündel.

30. Verwendung einer optischen Stufenfaser nach einem der Ansprüche 1 bis 27 zur Datenübertragung.

31. Verwendung einer optischen Stufenfaser nach einem der Ansprüche 1 bis 27 zur Datenübertragung in Fahrzeugen.

32. Verwendung einer optischen Stufenfaser nach einem der Ansprüche 1 bis 27 zur Fahrzeugbeleuchtung.

33. Verwendung einer optischen Stufenfaser nach einem der Ansprüche 1 bis 27 als Verkehrszeichengeber.

34. Verwendung einer optischen Stufenfaser nach einem der Ansprüche 1 bis 27 für die Bahnsignalisation.

35. Verwendung einer optischen Stufenfaser nach einem der Ansprüche 1 bis 27 als alphanumerisches Display.

36. Verwendung einer optischen Stufenfaser nach einem der Ansprüche 1 bis 27 zur Beleuchtung in sogenannten Kaltlichtquellen.

37. Verwendung einer optischen Stufenfaser nach einem der Ansprüche 1 bis 27 zur Beleuchtung in der medizinischen und technischen Endoskopie.

38. Verwendung einer optischen Stufenfaser nach einem der Ansprüche 1 bis 27 zur Beleuchtung in der Operationsmikroskopie.
